## Europäisches Patentamt
## European Patent Office
### Office européen des brevets

(19)

(11) Veröffentlichungsnummer: **0 120 433**
**B1**

(12) **EUROPÄISCHE PATENTSCHRIFT**

(45) Veröffentlichungstag der Patentschrift:
23.04.86

(21) Anmeldenummer: 84102983.8

(22) Anmeldetag: 17.03.84

(51) Int. Cl.⁴: **C 01 B 33/20**

(54) **Verfahren zur Herstellung von Bleisilicat.**

(30) Priorität: 24.03.83 DE 3310690

(43) Veröffentlichungstag der Anmeldung:
03.10.84 Patentblatt 84/40

(45) Bekanntmachung des Hinweises auf die Patenterteilung:
23.04.86 Patentblatt 86/17

(84) Benannte Vertragsstaaten:
AT BE CH DE FR GB IT LI NL SE

(56) Entgegenhaltungen:
DE - B - 1 187 592
DE - C - 838 181

CHEMICAL ABSTRACTS, Band 70, Nr. 20, 19. Mai 1969,
Seite 408, Nr. 92717k, Columbus, Ohio, USA; H.W.
BILLHARDT: "Synthesis of lead pyrosilicate and other
barysilitelike compounds" & AMER. MINERAL. 1969,
54(3-4), 510-521
CHEMICAL ABSTRACTS, Band 72, Nr. 4, 26. Januar
1970, Seite 440, Nr. 17992j, Columbus, Ohio, USA; D.
BORDEAUX et al.: "Synthesis of barysilite Pb3Si2O7" &
BULL. SOC. FR. MINERAL. CRISTALLOGR. 1969, 92(4),
383-385

(73) Patentinhaber: HOECHST AKTIENGESELLSCHAFT,
Postfach 80 03 20, D-6230 Frankfurt am Main 80 (DE)

(72) Erfinder: Schott, Martin, Dr., Königsteiner Strasse 7,
D-6374 Steinbach/Taunus (DE)
Erfinder: Russow, Jürgen, Dr., Am Schieferberg 45,
D-6233 Kelkheim (Taunus) (DE)

# Beschreibung

Die vorliegende Erfindung betrifft die Herstellung von Bleisilicat der Formel $Pb_3Si_2O_7$ in wässeriger Phase aus Bleioxid.

In der Literatur sind eine Reihe von Bleisilicaten beschrieben, die alle durch Zusammenschmelzen von Bleioxid PbO und Siliciumdioxid $SiO_2$ in wechselnden Mengenverhältnissen hergestellt wurden. Eine erhebliche Schwierigkeit dieses Verfahrens liegt darin, dass die einzelnen Bleisilicate nur in einem bestimmten Temperaturbereich stabil sind. Beim Abkühlen oder beim Erhitzen zerfallen sie in andere Bleisilicate und ggf. in die Ausgangsprodukte PbO oder $SiO_2$. Ein entsprechendes Phasendiagramm haben W.R. Ott und M.G. McLaren aufgestellt (,,J. Am. Ceramic Soc.'', 53 (1970), S. 374-75). In der Literatur bekannt sind die Verbindungen mit dem Molverhältnis PbO: $SiO_2$ von 4:1, 2:1, 3:2 und 1:1. Dabei scheint es besonders schwierig zu sein, die Verbindung $3\,PbO{\cdot}2\,SiO_2$ ($Pb_3Si_2O_7$) auf thermischem Wege zu erhalten. So heisst es in Gmelins Handbuch der anorganischen Chemie (,,Blei'', Teil C, S. 847), dass die Existenz der reinen Verbindung von einigen Autoren bestritten wurde. Ausser dem thermischen Verfahren wird dort (S. 848) noch eine Darstellung der Verbindung durch Zugabe einer wässerigen 0,05 molaren Bleinitratlösung zu einer überschüssiges NaOH enthaltenden 0,05 molaren $Na_2SiO_3$-Lösung beschrieben. Die Darstellung von $Pb_3Si_2O_7$ auf diesem Wege hat zwei wesentliche Nachteile. Einmal führt das Arbeiten in stark verdünnter Lösung zu erheblichen Mengen an Mutterlauge. Ausserdem müssen sich sehr gründliche Waschprozesse anschliessen, um entstandenes Natriumnitrat und überschüssige Natronlauge zu entfernen. Bei Verwendung von $Pb_3Si_2O_7$ als Korrosionsschutzpigment stören bereits kleine Mengen an löslichen Salzen und an freiem Alkali.

Es bestand daher die Aufgabe, Bleisilicat nach einem nichtthermischen Verfahren auf einfache Weise herzustellen, bei dem Waschprozesse zur Entfernung von Alkaliionen kaum nötig sind.

Es wurde nun ein Verfahren zur Herstellung von Bleisilicat der Formel $Pb_3Si_2O_7$ in wässeriger Phase gefunden, das dadurch gekennzeichnet ist, dass stöchiometrische Mengen von pulverförmigem Blei-(II)-Oxid in einer wässerigen kolloidalen Kieselsäure-Lösung so lange dispergiert werden, bis vollständige Umsetzung vorliegt. Als Bleioxid kommt vorzugsweise die gelbe Modifikation von PbO (sogenannte Bleiglätte) zum Einsatz; doch ist auch die rote Modifikation geeignet. Kolloidale Kieselsäure-Lösungen sind als ,,Kieselsol'' mit Konzentrationen von bis zu 40 Gew.-% $SiO_2$ im Handel verfügbar.

Um eine rasche Reaktion zu erreichen, ist eine intensive Durchmischung der beiden Komponenten von Vorteil. Als Mischelement eignet sich beispielsweise ein intensiv wirkender Dispergator. Die Reaktion läuft schon bei Raumtemperatur ab, wird jedoch bei erhöhter Temperatur wesentlich beschleunigt. Deshalb erfolgt die Herstellung vorzugsweise im Temperaturbereich von 60 bis 85° C.

Eine weitere Beschleunigung der Umsetzung ist möglich, wenn ein Kieselsol mit einem pH-Wert von 4 bis 6, vorzugsweise 4,8 bis 5,2, eingesetzt wird. Dieser pH-Wert lässt sich durch Ansäuern des Kieselsols mit Säure, z.B. mit verdünnter Essigsäure, vor der Zugabe des Bleioxids erreichen. Vorzugsweise werden hierfür schwache Säuren eingesetzt, die lösliche Bleisalze bilden. Die Reaktionszeit beträgt dann nur einige Minuten. Ein weiterer Vorteil des Verfahrens liegt darin, dass die Umsetzung in einer relativ konzentrierten Aufschlämmung erfolgen kann, wodurch eine hohe Raumausbeute möglich wird. Ausserdem entsteht nur wenig Mutterlauge. Es ist möglich, bis zu 300 g Bleisilicat pro Liter Reaktionsvolumen zu erzeugen. Die in der Reaktionsmischung vorhandene Wassermenge muss lediglich so gross sein, dass die bei diesem Herstellungsverfahren anfangs entstehende Dispersion von Bleioxid in der Kieselsäure-Lösung nicht steif, sondern noch durchmischbar ist.

Die erfindungsgemässe Umsetzung erfolgt gemäss folgender Gleichung $3\,PbO + 2\,SiO_2 \rightarrow Pb_3Si_2O_7$. Bei dem erfindungsgemässen Verfahren ist die Umsetzung von Bleioxid und Kieselsäure zu Bleisilicat praktisch vollständig. Die Ausbeute beträgt über 99%. Die bei der Umsetzung entstehende Aufschlämmung von Bleisilicat enthält nur wenig Fremdsalze. Das zum Einsatz kommende Kieselsol kann kleine Mengen an Natriumionen zur Stabilisation enthalten. Durch das Ansäuern vor Beginn der Umsetzung gelangen auch noch Anionen in das System. Es liegt dann nach beendeter Reaktion neben dem unlöslichen Bleisilikat eine sehr verdünnte Lösung eines Natriumsalzes, z.B. von Natriumacetat, vor. Nach der Filtration kann der Filterkuchen kurz mit Wasser gewaschen werden, um noch vorliegendes Natriumacetat zu verdrängen.

Das erfindungsgemäss hergestellte Bleisilicat ist sehr feinteilig mit mittleren Korngrössen unter 5 Mikrometer. Damit kann bei einer Verwendung als Korrosionsschutzpigment eine aufwendige Mahlung im allgemeinen unterbleiben.

Es ist allenfalls notwendig, die beim Trocknen des Filterkuchens entstandenen Agglomerate zu zerstören. Damit unterscheidet sich das erfindungsgemässe Verfahren deutlich von den thermischen Prozessen, bei denen im allgemeinen eine kompakte Masse entsteht, die mehrstufig zerkleinert bzw. gemahlen werden muss, um die gewünschte Kornfeinheit zu erhalten.

Die Erfindung wird durch die folgenden Beispiele näher erläutert.

*Beispiel 1*

In einem beheizbaren Gefäss mit Dispergator (z.B. Ultraturax®) werden 60 g eines Kieselsols mit einem Gehalt von 30% $SiO_2$ durch Zugabe von ca. 7 ml einer 10%igen Essigsäure auf pH 5 eingestellt. Dann wird das Sol mit 350 ml Wasser verdünnt. Die resultierende ca. 4,3%ige Lösung wird auf 70° C erwärmt. Während der Dispergator läuft, werden 100 g PbO (handelsübliches Bleioxid, sogenannte Bleiglätte) zugegeben. Es entsteht eine breiige Dispersion, die im Laufe der Umsetzung flüssiger wird. Unter kräftiger Dispergierung wird die Aufschlämmung 10 min bei 80° C gehalten. Die anfangs gelbe Masse wird weiss. Das entstandene feinteilige Bleisilicat wird abgesaugt, mit Wasser gewaschen und dann getrocknet. Die Ausbeute an $Pb_3Si_2O_7$ (bezogen auf eingesetztes PbO) beträgt 99%. Nach Zerkleinern der beim Trocknen entstandenen Brocken in einer Schlagkreuzmühle beträgt die mittlere Korngrösse 3,5 Mikrometer.

*Beispiel 2*

In einem beheizbaren Gefäss mit Dispergator werden 660 g eines Kieselsols mit 30% $SiO_2$ durch Zugabe von 3,5 l Wasser verdünnt. Die resultierende Lösung wird auf 70° C erwärmt. Während der Dispergator läuft, werden 1100 g PbO (wie in Beispiel 1) zugegeben. Es entsteht eine breiige Dispersion, die im Laufe der Umsetzung flüssiger wird. Die Aufschlämmung wird 4 Stunden bei 80° C gehalten, wobei in dieser Zeit der Dispergator 6 mal je 10 min eingeschaltet ist. Die anfangs gelbe Masse wird fast weiss. Die Aufarbeitung des entstandenen $Pb_3Si_2O_7$ erfolgt wie in Beispiel 1.

*Beispiel 3*

In einem beheizbaren Gefäss mit Dispergator werden 41,8 g PbO mit 625 ml Wasser aufgeschlämmt und auf 80° C erwärmt. Während der Dispergator läuft, werden 125 g eines Kieselsols mit 6% $SiO_2$, das zuvor auf pH 5 eingestellt worden war, zugegeben. Unter kräftiger Dispergierung wird die Aufschlämmung noch 10 min bei 80° C gehalten. Die anfangs gelbe Masse wird weiss. Die Aufarbeitung des entstehenden Bleisilikats erfolgt wie in Beispiel 1.

**Patentansprüche**

1. Verfahren zur Herstellung von Bleisilicat der Formel $Pb_3Si_2O_7$ in wässeriger Phase, dadurch gekennzeichnet, dass stöchiometrische Mengen von pulverförmigem Blei-(II)-Oxid in einer wässerigen kolloidalen Kieselsäure-Lösung so lange dispergiert werden, bis vollständige Umsetzung vorliegt.

2. Verfahren nach Anspruch 1, dadurch gekennzeichnet, dass die kolloidale Kieselsäure-Lösung einen pH-Wert von 4 bis 6 aufweist.

3. Verfahren nach Anspruch 2, dadurch gekennzeichnet, dass das Kieselsol unmittelbar vor dem Vermischen mit Bleioxid mit Säure auf einen pH-Wert von 4 bis 6 eingestellt wird.

4. Verfahren nach Anspruch 3, dadurch gekennzeichnet, dass für die Einstellung des pH-Werts Essigsäure verwendet wird.

**Claims**

1. A process for the preparation of lead silicate of the formula $Pb_3Si_2O_7$ in the aqueous phase, which comprises dispersing a stoichiometric amount of pulverulent lead-(II) oxide in an aqueous colloidal silicic acid solution until the reaction is complete.

2. The process as claimed in Claim 1, wherein the colloidal silicic acid solution has a pH value of 4 to 6.

3. The process as claimed in Claim 2, wherein the kieselsol is adjusted to a pH value of 4 to 6 with acid immediately before being mixed with the lead oxide.

4. The process as claimed in Claim 3, wherein acetic acid is used for adjusting the pH value.

**Revendications**

1. Procédé de préparation d'un silicate de plomb de formule $Pb_3Si_2O_7$, en phase aqueuse, procédé caractérisé en ce qu'on disperse des quantités stœchiométriques d'oxyde de plomb (II) pulvérulent dans une solution aqueuse colloïdale d'acide silicique, jusqu'à ce que la réaction soit totale.

2. Procédé selon la revendication 1, caractérisé en ce que la solution colloïdale d'acide silicique a un pH de 4 à 6.

3. Procédé selon la revendication 2, caractérisé en ce que, juste avant de mélanger le sol de silice avec l'oxyde de plomb, on règle son pH à une valeur de 4 à 6 au moyen d'un acide.

4. Procédé selon la revendication 3, caractérisé en ce qu'on utilise de l'acide acétique pour régler le pH.